# FASCICULE DE BREVET EUROPEEN

(11) **EP 3 662 629 B1**
(45) Date de publication et mention de la délivrance du brevet: **30.08.2023**
(21) Numéro de dépôt: 18752604.1
(22) Date de dépôt: 30.07.2018
(51) Int. Cl.: H04M 1/27, H04M 3/42, H04M 3/56, H04L 65/403

(54) **PROCEDE DE CREATION ET DE PARTICIPATION A UNE CONFERENCE AUDIO OU VIDEO**
VERFAHREN ZUR ERZEUGUNG UND TEILNAHME AN EINER AUDIO- ODER VIDEOKONFERENZ
METHOD FOR CREATING AND PARTICIPATING IN AN AUDIO OR VIDEO CONFERENCE

(30) Priorité: 01.08.2017 FR 1757375
(43) Date de publication de la demande: 10.06.2020
(73) Titulaire: Invoxia, 92130 Issy Les Moulineaux (FR)
(72) Inventeur: HUMBERT, Eric, 92100 Boulogne Billancourt (FR)
(74) Mandataire: Plasseraud IP
(86) Numéro de dépôt international: PCT/FR2018/051954
(87) Numéro de publication internationale: WO 2019/025712

(56) Documents cités:
- US-A1- 2010 150 321
- US-A1- 2013 130 665

## Description

### DOMAINE DE L'INVENTION

L'invention concerne un procédé de création de conférence audio ou vidéo, et d'autorisation à rejoindre la conférence. L'invention concerne également un serveur de gestion de conférences audio ou vidéo, ainsi qu'un terminal pouvant communiquer avec le serveur pour demander la création de conférence et/ou rejoindre une conférence.

### ETAT DE LA TECHNIQUE

Une conférence audio ou vidéo permet de réunir plusieurs utilisateurs équipés chacun d'un terminal, dans une même session permettant aux utilisateurs de dialoguer entre eux.

Classiquement, une personne souhaitant établir une conférence peut utiliser un logiciel dédié, qui crée une conférence et peut envoyer aux participants une invitation contenant la date et l'heure prévue de la conférence, ainsi qu'un numéro de téléphone à appeler ou une adresse URL à rejoindre pour accéder à la conférence, et le cas échéant un mot de passe permettant d'accéder à la conférence.

Pour accéder à la conférence, chaque participant doit retrouver l'invitation, composer le numéro ou suivre l'adresse URL indiquée, puis éventuellement fournir le mot de passe en réponse à une invitation qui lui aura été préalablement adressée.

Dans le cas où un participant veut inviter un autre participant non prévu initialement, il doit lui communiquer à la fois le numéro ou l'adresse url, puis le mot de passe, qui est généralement composé d'une série de chiffres et de lettres pour assurer la sécurité de l'accès à la conférence.

Le fait pour un participant de se connecter comprend donc une succession d'étapes nécessitant une attention élevée. En cas de perte du mot de passe et/ou du numéro ou de l'url pour se connecter à la conférence, la connexion est impossible.

Il existe donc un besoin pour simplifier l'accès à une conférence audio ou vidéo.

Il a été proposé à cet égard dans le document US 9,401,938 un programme pouvant être installé sur un terminal mobile, qui est adapté pour agréger, à partir du calendrier stocké dans le terminal mobile, une liste de conférences prévues pour l'utilisateur du terminal, et pour afficher cette liste en permettant à l'utilisateur de choisir une conférence parmi la liste affichée.

Cette solution permet à un utilisateur d'accéder plus simplement à une conférence, mais reste contraignant pour les utilisateurs souhaitant accéder à la conférence car il reste impératif d'utiliser le numéro ou l'url permettant d'accéder à la conférence, ainsi que le mot de passe associer. Ces éléments doivent également être transmis à un utilisateur ne disposant pas d'une invitation et souhaitant se connecter à la conférence.

Il a également été proposé dans le document US 8,744,421 de pré-enregistrer, dans un véhicule, des codes d'accès à des conférences.

Lors d'une demande de connexion d'un utilisateur à une conférence téléphonique, l'utilisateur se trouvant dans son véhicule, une fonctionnalité de reconnaissance vocale du véhicule est utilisée pour interpréter une demande de code d'accès émise par le service de conférence téléphonique lorsque le participant compose le numéro pour se connecter à la conférence.

Puis, en réponse à cette demande de code d'accès, le code d'accès est envoyé automatiquement par l'électronique embarquée dans le véhicule au service de conférence téléphonique. Dans un cas, le code d'accès peut avoir été préalablement prononcé par l'utilisateur, et détecté et enregistré par la fonctionnalité de reconnaissance vocale du véhicule.

Cette autre solution simplifie l'accès à une conférence téléphonique par un occupant d'un véhicule en reportant l'étape nécessitant l'attention de l'occupant, qui consiste à formuler le code d'accès, avant l'établissement de la connexion à la conférence. Toutefois il est quand même nécessaire d'accéder au code d'accès et au numéro permettant de rejoindre la conférence téléphonique.

Le document US 2010/150321 décrit un procédé de numérotation téléphonique à commande vocale, dans lequel, lorsqu'un utilisateur prononce un identifiant vocal qui a été préalablement enregistré en association avec un ou plusieurs contacts, le numéro associé à l'identifiant vocal est composé automatiquement.

Le document US 2013/130665 décrit un procédé de connexion d'un terminal à une conférence téléphonique dans lequel un code d'accès à une conférence téléphonique est associé à une commande verbale propre à un utilisateur et enregistré dans un véhicule de l'utilisateur.

### DESCRIPTION DE L'INVENTION

L'invention a pour but de pallier les inconvénients de l'art antérieur, en proposant un moyen simplifié de rejoindre une conférence téléphonique.

Un but de l'invention est en particulier de faciliter l'accès à une conférence téléphonique par un utilisateur, tout en maintenant cet accès sécurisé.

Un autre but de l'invention est de pouvoir être mise en oeuvre facilement sur tout type d'appareil de téléphonie.

A cet égard, l'invention a pour objet un procédé de création de conférence audio ou vidéo et d'autorisation de participants à rejoindre la conférence, mis en oeuvre par un système comprenant un serveur et au moins un terminal comprenant un microphone, le terminal étant en outre adapté pour communiquer avec le serveur par un réseau de communication, le procédé comprenant les étapes de :
- création par le serveur d'une conférence audio ou vidéo, la conférence étant associée à un identifiant unique,
- connexion d'au moins un terminal à la conférence audio ou vidéo, caractérisé en ce que l'identifiant unique de la conférence audio ou vidéo comprend au moins deux mots, et en ce que la connexion du terminal à la conférence audio ou vidéo comprend :
   - l'établissement d'une connexion entre le terminal et le serveur,
   - un enregistrement, par le microphone du terminal, d'une séquence vocale d'un utilisateur du terminal,
   - la transcription de la séquence vocale en texte, et
   - la comparaison, par le serveur, du texte à au moins un identifiant de conférence, et
   - si le texte correspond à l'identifiant d'une conférence, la connexion du terminal à la conférence.

Avantageusement, mais facultativement, le procédé selon l'invention peut en outre comprendre au moins l'une des caractéristiques suivantes :
- chaque mot de l'identifiant unique de la conférence peut être tiré aléatoirement parmi une bibliothèque de mots.
- Avantageusement, la conférence peut être créée à réception par le serveur d'une requête provenant d'un terminal.
- Dans un mode de réalisation, l'identifiant de la conférence est valable pendant une durée déterminée.
- Dans un autre mode de réalisation, l'identifiant est de validité permanente, et ledit identifiant comprend une phrase de plus de deux mots. Dans ce cas, le procédé peut comprendre, avant la création de la conférence par le serveur, une étape d'envoi d'une requête de création de conférence par un terminal au serveur, la requête comprenant en outre un identifiant proposé par le terminal, et l'étape de création de la conférence par le serveur comprend en outre une vérification, par le serveur, de la disponibilité de l'identifiant proposé, et, si l'identifiant proposé est disponible, l'association de l'identifiant proposé à la conférence.
- Dans certains modes de réalisation, le terminal peut comprendre en outre un haut-parleur, et le procédé comprend une étape d'envoi d'une requête de création d'une conférence par un terminal au serveur, et une étape de communication de l'identifiant de la conférence au terminal par le serveur, dans laquelle l'identifiant est converti en piste sonore énonçant les deux mots, et diffusé par le haut-parleur du terminal.
- En outre, l'identifiant peut être converti en piste sonore par le serveur, et ladite piste sonore peut être transmise par le serveur au terminal.
- Avantageusement, chaque connexion d'un terminal à la conférence est établie en VolP.

L'invention a également pour objet un serveur de gestion de conférence audio ou vidéo, comprenant :
- une mémoire dans laquelle est enregistrée une bibliothèque de mots,
- un calculateur,
- au moins une interface de communication avec des terminaux utilisateurs par au moins un réseau de communication,
le serveur étant adapté pour :
- transposer une séquence vocale d'un utilisateur d'un terminal en texte,
- comparer le texte à au moins un identifiant de conférence comprenant au moins deux mots inclus dans la bibliothèque de mots, et
- connecter le terminal à une conférence si le texte correspond à l'identifiant de la conférence.

Avantageusement, mais facultativement, le serveur selon l'invention peut en outre comprendre au moins l'une des caractéristiques suivantes :
- le serveur est adapté pour générer une conférence audio ou vidéo associée à un identifiant unique comprenant au moins deux mots inclus dans la bibliothèque de mots.
- le serveur est en outre adapté pour générer un identifiant unique de conférence par tirage aléatoire de deux mots choisis parmi la bibliothèque de mots, et pour convertir l'identifiant en piste sonore.

L'invention a également pour objet un produit programme d'ordinateur, comprenant des instructions de code pour la mise en oeuvre d'un procédé de création de conférence audio ou vidéo, et des instructions de code pour la mise en oeuvre d'un procédé de participation à une conférence audio ou vidéo, lorsque chaque procédé est mis en oeuvre par un processeur d'un terminal,
le procédé de création de conférence comprenant :
   - l'envoi d'une requête de création de conférence à un serveur,
   - la réception d'un identifiant de conférence comprenant au moins deux mots, et
   - l'affichage des mots de l'identifiant sur un écran du terminal ou la lecture d'une piste sonore énonçant les mots de l'identifiant par un haut-parleur du terminal, et
le procédé de participation à une conférence comprenant :
   - l'enregistrement d'une séquence vocale par un microphone du terminal,
   - la connexion au serveur et l'envoi de ladite séquence vocale au serveur.

Enfin l'invention porte également sur un terminal de conférence audio ou vidéo, comprenant :
- un haut-parleur,
- un microphone, et
   le terminal de conférence audio ou vidéo étant adapté pour se connecter à un serveur via un réseau de communication, et étant configuré pour mettre en oeuvre un procédé de création de conférence audio ou vidéo comprenant :
      - l'envoi d'une requête de création de conférence à un serveur,
      - la réception d'un identifiant de conférence comprenant au moins deux mots, et
      - l'affichage des mots de l'identifiant sur un écran du terminal ou la lecture d'une piste sonore énonçant les mots de l'identifiant par un haut-parleur du terminal, et
   et pour mettre en oeuvre un procédé de participation à une conférence comprenant :
      - l'enregistrement d'une séquence vocale par un microphone du terminal,
      - la connexion au serveur et l'envoi de ladite séquence vocale au serveur.

Avantageusement, mais facultativement, le terminal selon l'invention peut en outre comprendre une première interface de commande, configurée de sorte que son activation déclenche l'envoi d'une requête de création de conférence à un serveur, et une deuxième interface de commande, configurée de sorte que son activation déclenche les étapes d'enregistrement d'une séquence vocale, de connexion au serveur et d'envoi de ladite séquence vocale au serveur.

Le procédé selon l'invention permet à un utilisateur de se connecter facilement à une conférence audio ou vidéo tout en conservant l'accès à cette conférence sécurisée.

En effet, chaque conférence est associée à un identifiant unique comprenant au moins deux mots. Les avantages d'utiliser deux mots, ou plus, sont que ces mots sont faciles à comprendre et donc à retenir, comme code d'accès à une conférence. Ils peuvent aussi être facilement transmis d'un utilisateur à un autre par tout type de communication, que ce soit par la parole, ou un sms, etc.

De plus, il suffit à l'utilisateur d'utiliser son terminal pour composer un numéro unique de connexion au serveur de gestion des conférences, et de prononcer les deux mots, pour être connecté à la conférence qui le concerne. Une conférence est donc identifiée uniquement par son identifiant, et il n'est pas nécessaire de prévoir en plus un numéro ou une adresse url spécifique. Il n'est pas non plus nécessaire de prévoir d'autres interfaces sur le terminal qu'un micro et un haut-parleur, éléments par ailleurs forcément présents car indispensables à la mise ne oeuvre d'un appel.

La sécurité de l'accès à la conférence est assurée en tirant un nouveau jeu de mots aléatoirement parmi une bibliothèque de mots suffisamment grande. Le tirage a lieu à chaque création de conférence et il est valable tant qu'il reste une personne dans la salle virtuelle. Si on veut augmenter encore la sécurité tout en gardant la possibilité de retenir facilement l'identifiant d'une conférence, celui-ci peut comprendre une série de mots formant une phrase. Dans ce cas il est possible de créer une salle virtuelle permanente dans laquelle les utilisateurs disposant de la phrase secrète peuvent se rejoindre à tout moment.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels:
- La figure 1 représente un exemple de système informatique dans lequel un procédé pour créer ou rejoindre une conférence audio ou vidéo peut être mis en oeuvre.
- Les figures 2a et 2b représentent respectivement la mise en oeuvre d'un procédé pour créer une conférence audio ou vidéo, et la mise en oeuvre d'un procédé pour rejoindre ladite conférence,
- La figure 3 représente un exemple de terminal de conférence audio ou vidéo selon un mode de réalisation de l'invention.
- La figure 4 représente un exemple d'application logicielle permettant de créer ou rejoindre une conférence audio ou vidéo.

### DESCRIPTION DETAILLEE D'AU MOINS UN MODE DE REALISATION

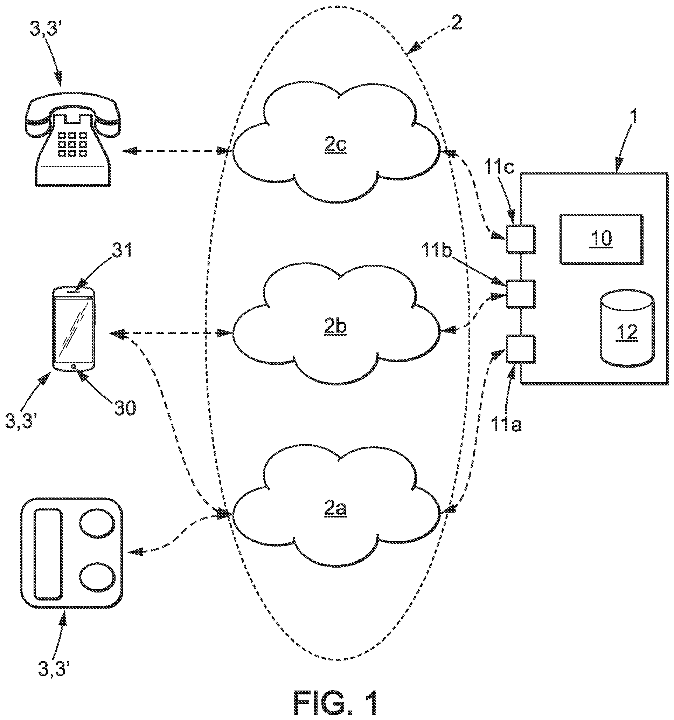

En référence à la figure 1, on a représenté un exemple d'un système informatique au sein duquel peut être créée une conférence audio ou vidéo.

Le système informatique comprend au moins un serveur 1 de gestion de conférence audio ou vidéo. Le serveur 1 est adapté pour créer une conférence audio ou vidéo, qui peut être associée à un numéro de téléphone (dans le cas d'une conférence téléphonique) ou à une adresse URL, et pour associer à la conférence un identifiant unique décrit plus en détails ci-après.

Le serveur 1 comporte un calculateur 10, pouvant être par exemple un processeur ou microprocesseur, ou un contrôleur ou microcontrôleur. Le calculateur 10 est adapté pour exécuter des instructions de code permettant de générer une conférence téléphonique associée à un identifiant et de connecter un terminal à une conférence, selon la description qui suit.

Le serveur 1 comprend également une interface 11 de communication avec des terminaux utilisateurs via au moins un réseau de communication 2. Cette interface 11 de communication peut être de nature diverse en fonction des terminaux utilisateurs prévus pour se connecter au serveur. Avantageusement, cette interface comprend au moins une interface 11a de connexion à internet 2a, et peut en outre comprendre au moins une interface 11b de connexion à un réseau de téléphonie mobile (GSM, GPRS) 2b, et au moins une interface 11c de connexion à un réseau de téléphonie filaire 2c.

Le serveur comprend également (ou en variante, peut être connecté à) une mémoire 12 dans laquelle est enregistrée une base de données de mots, comprenant par exemple au moins 500 mots d'une même langue, de préférence au moins 1000 mots d'une même langue. Optionnellement, la base de données peut comprendre plusieurs ensembles de mots de différentes langues, chaque ensemble comprenant au moins 500 mots. Ceci permet de rendre le service de conférence téléphonique accessible à des usagers de différentes nationalités.

Le système informatique comprend en outre au moins un terminal utilisateur 3, adapté pour se connecter au serveur 1 via un réseau.

Le terminal utilisateur 3 comporte au moins un microphone 30, un haut-parleur 31, et une interface de communication (non représentée) avec le serveur 1 via le réseau.

Selon un mode de réalisation, le terminal utilisateur peut être un téléphone standard, relié de manière filaire au réseau de téléphonie filaire 2c.

En variante, le terminal utilisateur 3 peut être un téléphone mobile, relié au serveur 1 par le réseau de téléphonie mobile 2b.

Le terminal utilisateur 3 peut également être équipé d'une connexion à internet et être relié au serveur par internet 2a.

Selon un exemple préféré, le terminal utilisateur peut être adapté pour mettre en oeuvre le protocole TCP/IP pour se connecter à une conférence téléphonique par la technologie VolP (pour Voix sur IP), permettant de communiquer par la voix sur internet. En effet la technologie VolP permet une meilleure qualité de voix qu'en téléphonie classique.

Ce terminal VolP peut être un téléphone mobile utilisant internet pour se connecter à la conférence, ou un téléphone de conférence, dédié à l'usage de conférences audio ou vidéo.

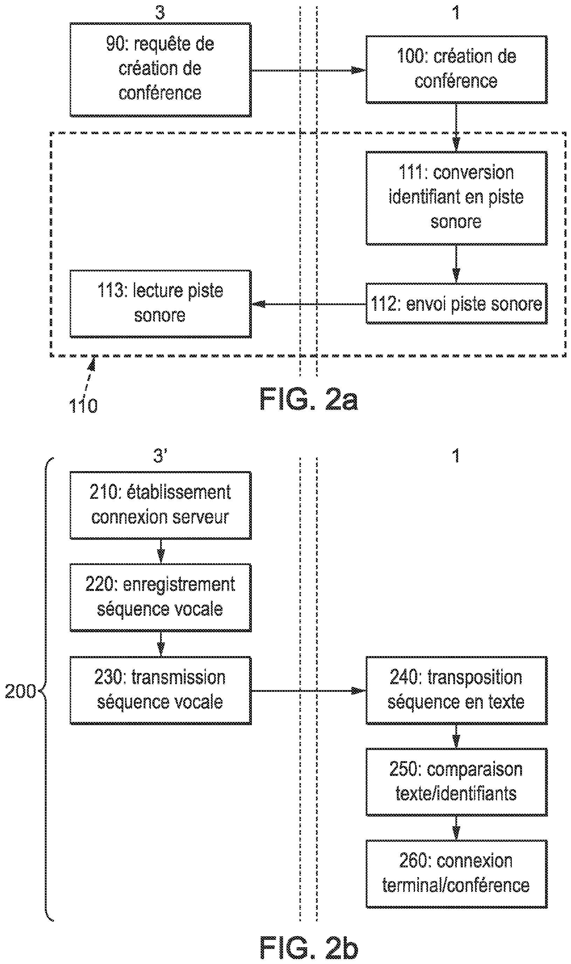

En référence à la figure 2a, on va maintenant décrire un exemple de procédé de création de conférence audio ou vidéo.

Au cours d'une étape 100, le serveur 1 de gestion de conférence crée une conférence audio ou vidéo et lui associe un identifiant unique comprenant au moins deux mots, c'est-à-dire une séquence de texte formée au moins de deux mots tirés dans la mémoire du serveur 1.

L'étape de création de la conférence 100 fait suite à une requête 90 de création de conférence envoyée par un terminal utilisateur au serveur 1.

Dans un mode de réalisation, la conférence est temporaire, c'est-à-dire que la conférence audio ou vidéo est un emplacement réservé sur une ligne téléphonique ou à une adresse URL, pendant une période de temps finie. Dans ce cas, le serveur 1 génère avantageusement l'identifiant unique de la conférence à l'étape 100, en réponse à la requête. Une fois la conférence terminée, l'emplacement sur la même ligne téléphonique peut être utilisé pour générer une nouvelle conférence associée à un autre identifiant unique.

Alors, l'identifiant unique associé à cette conférence présente une durée de validité déterminée, par exemple égale à 10 minutes, ou 5 minutes.

Dans ce cas également, l'identifiant unique comprend avantageusement un nombre réduit de mots, par exemple exactement deux mots, pour pouvoir être aisément retenu et rapidement répété par un utilisateur. Les mots sont avantageusement tirés aléatoirement parmi la bibliothèque de mots stockée dans la mémoire 12 du serveur, de manière à augmenter la confidentialité de l'identifiant et donc la sécurité de l'accès à la conférence.

Selon un autre exemple de réalisation, la conférence 100 peut être une salle virtuelle de durée de validité permanente, à laquelle des utilisateurs peuvent se connecter à tout moment.

Dans ce cas, l'identifiant unique de la conférence est une phrase, de validité permanente, comprenant plus de mots qu'un identifiant unique d'une conférence de durée limitée. En effet, pour compenser la diminution de sécurité de l'identifiant liée à son caractère permanent, un nombre de mots plus important permet de réduire la probabilité de trouver la phrase pour accéder à la conférence.

Cet identifiant unique est alors de préférence choisi par l'utilisateur, et communiqué par l'utilisateur lors de l'étape 90 d'envoi de requête au serveur 1, soit en étant prononcé oralement par l'utilisateur, soit en étant transmis par écrit, par exemple via une application ou un site web dédié. L'étape 100 de création de la conférence comprend dans ce mode de réalisation une vérification par le serveur de la disponibilité de la phrase envoyée par l'utilisateur. Si l'identifiant est disponible, le serveur 1 crée la salle virtuelle et y associe l'identifiant. Dans le cas contraire, le serveur 1 peut retourner à l'utilisateur ayant envoyé la requête de création de conférence un message l'invitant à envoyer un nouvel identifiant.

Une fois la conférence créée, l'identifiant de la conférence peut être communiqué par le serveur 1 à un terminal mobile 3 au cours d'une étape 110. Cette communication de l'identifiant peut constituer une confirmation par le serveur de la création de la salle virtuelle, ou en variante peut être accompagnée d'une confirmation explicite de la création de la salle virtuelle.

Dans le cas où une requête de création 90 de conférence a été envoyée par un terminal mobile 3, le même terminal reçoit l'identifiant en réponse.

Avantageusement, les mots formant l'identifiant de la conférence sont diffusés par le haut-parleur 31 du terminal mobile 3. Dans ce cas, l'étape 110 de communication de l'identifiant comprend une conversion 111 des mots en piste sonore, cette conversion étant effectuée de préférence par le serveur, l'envoi 112 de la piste sonore par le serveur au terminal mobile 3, et la lecture 113 de la piste sonore par le haut-parleur 31. Ceci permet de diminuer l'attention nécessaire de l'utilisateur et permet également de retenir l'identifiant facilement sans avoir besoin de le lire.

En variante, si le terminal 3 comprend un écran, les mots formant l'identifiant unique peuvent être communiqués au cours de l'étape 110 sans transcription en piste sonore, et sont alors affichés sur l'écran du terminal 3.

Dans le cas où l'utilisateur a proposé un identifiant lors de l'envoi de la requête de création de conférence à l'étape 90 (cas d'une conférence permanente), cette étape permet de confirmer auprès de l'utilisateur ayant proposé l'identifiant que ce dernier est associé à la conférence, et de confirmer la création de la salle virtuelle.

Une fois l'identifiant communiqué à un terminal 3, l'utilisateur peut le communiquer aux autres utilisateurs devant rejoindre la conférence, par n'importe quel mode de communication (diffusion orale, sms, email, etc.). Cette communication doit être réalisée assez rapidement pour que les autres utilisateurs puissent se connecter avec cet identifiant avant l'expiration de la durée de validité de l'identifiant. Le fait que l'identifiant comporte un nombre limité de mots permet néanmoins de le mémoriser facilement et de le communiquer facilement à d'autres utilisateurs.

De plus, le serveur 1 connecte avantageusement le terminal utilisateur 3 duquel provient la requête de création de la conférence à la conférence ainsi créée, de manière à éviter au terminal d'effectuer d'autres étapes pour se connecter à la conférence.

En référence à la figure 2b, le procédé comprend ensuite une étape de connexion 200 à une conférence téléphonique de la part d'un autre terminal utilisateur 3'.

Ce procédé comporte une première étape 210 au cours de laquelle le terminal utilisateur 3' établit une connexion avec le serveur. Cette connexion est par exemple établie en composant un numéro de téléphone ou une adresse URL unique d'accès au serveur. Une fois cette connexion établie, l'utilisateur du terminal 3' peut être invité à fournir un identifiant de conférence téléphonique pour être connecté à une conférence, par exemple au moyen d'un message enregistré.

Le procédé de connexion 200 comprend alors une étape 220 au cours de laquelle une séquence vocale prononcée par l'utilisateur du terminal 3' est enregistrée par le microphone du terminal 3'. En variante, cette étape peut avoir lieu avant la connexion établie avec le serveur.

Cette séquence vocale est ensuite transmise 230 au serveur 1, et transposée 240 en texte. De préférence, la transposition de la séquence vocale en texte est mise en oeuvre par le calculateur 10 du serveur, une fois qu'elle a été transmise au serveur. En variante, cette transposition pourrait être réalisée par le terminal 3' et le texte serait transmis au serveur, mais cette variante implique davantage de fonctionnalités, et donc de contraintes, pour le terminal 3'.

Le serveur 1 compare ensuite lors d'une étape 250 le texte obtenu à l'ensemble des identifiants de conférence téléphonique en cours de validité. Si une correspondance est détectée entre le texte et un identifiant en cours de validité, le serveur 1 connecte le terminal 3' à la conférence correspondant à l'identifiant au cours d'une étape 260.

Le procédé proposé, basé sur l'utilisation de deux mots comme identifiant de conférence téléphonique, permet à un utilisateur de comprendre et retenir facilement un identifiant, et d'utiliser la voix comme interface homme/machine, ce qui réduit les manipulations et l'attention de l'utilisateur. En outre, la connexion à une conférence téléphonique est établie sur la base de l'identifiant de la conférence, donc un utilisateur ne dispose que du numéro de téléphone permettant de se connecter au serveur.

Afin de simplifier encore les manipulations à effectuer de la part d'un utilisateur, on peut envisager de doter un terminal utilisateur de fonctionnalités dédiées permettant de se connecter directement au serveur 1 de gestion de conférence téléphonique pour créer une conférence téléphonique ou la rejoindre. Ce terminal est connecté au serveur par IP, au moyen par exemple d'une connexion wifi ou ethernet.

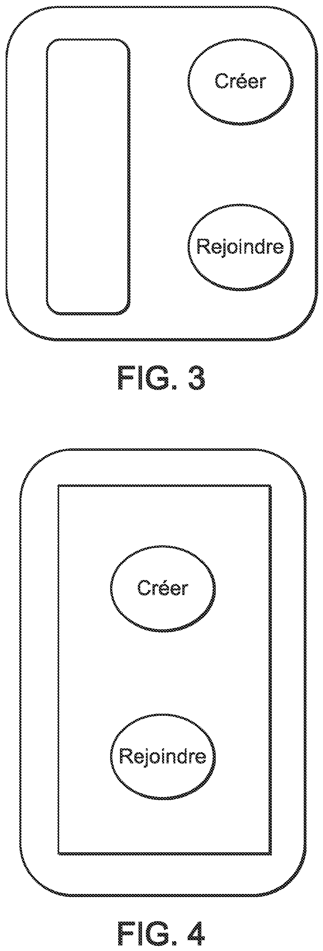

Selon un mode de réalisation avantageux, le serveur 1 peut être accessible par deux interfaces distinctes, une première étant dédiée à l'envoi de requêtes de création de conférence, et l'autre étant dédiée à la connexion à une conférence. Pour simplifier la connexion à chacune des interfaces, en référence à la figure 3, un terminal 3 de conférence peut comprendre une interface de commande (par exemple un bouton) 33 « créer » configurée pour permettre l'accès du terminal à la première interface, et une interface de commande (par exemple un bouton) 34 « rejoindre » configurée pour permettre l'accès du terminal à la deuxième interface.

Le fait d'appuyer sur l'un ou l'autre bouton entraine l'accès par le terminal à l'une ou l'autre interface, respectivement. En particulier, le fait d'activer la première interface de commande déclenche la connexion à la première interface du serveur 1 et l'envoi au serveur d'une requête de création de conférence. L'activation de la deuxième interface peut typiquement déclencher l'enregistrement d'une séquence vocale de l'utilisateur (identifiant de conférence), la connexion à la deuxième interface du serveur 1 et l'envoi au serveur de la séquence vocale pour rejoindre une conférence.

Selon un autre exemple représenté sur la figure 4, une application logicielle peut être installée sur un téléphone mobile ou une tablette, comprenant un élément d'interface « créer » configuré pour connecter le terminal à la première interface, et un élément d'interface « rejoindre » configuré pour connecter le terminal à la deuxième interface.

## Revendications

1. Procédé de création de conférence audio ou vidéo et d'autorisation de participants à rejoindre la conférence, mis en oeuvre par un système comprenant un serveur (1) et au moins un terminal (3) comprenant un microphone (30), le terminal (3) étant en outre adapté pour communiquer avec le serveur (1) par un réseau de communication (2), le procédé comprenant les étapes de :
- création (100) par le serveur d'une conférence audio ou vidéo, et association par le serveur d'un identifiant unique à la conférence,
- connexion (200) d'au moins un terminal (3, 3') à la conférence audio ou vidéo,
**caractérisé en ce que** l'identifiant unique de la conférence audio ou vidéo comprend au moins deux mots, et **en ce que** la connexion (200) du terminal à la conférence audio ou vidéo comprend :
- l'établissement (210) d'une connexion entre le terminal (3, 3') et le serveur (1),
- un enregistrement (220), par le microphone du terminal (3, 3'), d'une séquence vocale d'un utilisateur du terminal,
- la transcription (240) de la séquence vocale en texte, et
- la comparaison (250), par le serveur (1), du texte à au moins l' identifiant de conférence comprenant au moins deux mots, et
- si le texte correspond à l'identifiant de la conférence, la connexion (260) du terminal à la conférence.

2. Procédé selon la revendication 1, dans lequel chaque mot de l'identifiant unique de la conférence est tiré aléatoirement parmi une bibliothèque de mots.

3. Procédé selon l'une des revendications 1 ou 2, dans lequel la conférence est créée à réception par le serveur d'une requête (90) provenant du terminal (3).

4. Procédé selon l'une des revendications précédentes, dans lequel l'identifiant de la conférence est valable pendant une durée déterminée.

5. Procédé selon l'une des revendications 1 à 3, dans lequel l'identifiant est de validité permanente, et ledit identifiant comprend une phrase de plus de deux mots.

6. Procédé selon la revendication 5, comprenant, avant la création (100) de la conférence par le serveur, une étape d'envoi d'une requête (90) de création de conférence par le terminal (3) au serveur, la requête comprenant en outre un identifiant proposé par le terminal (3), et l'étape (100) de création de la conférence par le serveur comprend en outre une vérification, par le serveur, de la disponibilité de l'identifiant proposé, et, si l'identifiant proposé est disponible, l'association de l'identifiant proposé à la conférence.

7. Procédé selon l'une des revendications précédentes, le terminal (3, 3') comprenant en outre un haut-parleur (31), et le procédé comprenant en outre une étape d'envoi d'une requête (90) de création d'une conférence par le terminal (3) au serveur (1), et une étape (110) de communication de l'identifiant de la conférence au terminal (3) par le serveur (1), dans laquelle l'identifiant est converti (111) en piste sonore énonçant les deux mots, et diffusé (113) par le haut-parleur du terminal.

8. Procédé selon la revendication précédente, dans lequel l'identifiant est converti (111) en piste sonore par le serveur (1), et ladite piste sonore est transmise (112) par le serveur au terminal.

9. Procédé selon l'une des revendications précédentes, dans lequel chaque connexion d'un terminal à la conférence est établie en VoIP.

10. Serveur (1) de gestion de conférence audio ou vidéo, comprenant :
- une mémoire (11) dans laquelle est enregistrée une bibliothèque de mots,
- un calculateur (10),
- au moins une interface de communication (12) avec des terminaux utilisateurs (3, 3') par au moins un réseau de communication (2),
le serveur étant adapté pour :
- créer une conférence audio ou vidéo, et associer un identifiant unique à la conférence,
- transposer (240) une séquence vocale d'un utilisateur d'un terminal en texte,
- comparer (250) le texte à au moins un identifiant de conférence comprenant au moins deux mots inclus dans la bibliothèque de mots, et
- connecter (260) le terminal à une conférence si le texte correspond à l'identifiant de la conférence.

11. Serveur (1) selon la revendication 10, le serveur étant en outre adapté pour générer (100) une conférence audio ou vidéo associée à un identifiant unique comprenant au moins deux mots inclus dans la bibliothèque de mots.

12. Serveur (1) selon la revendication 11, le serveur étant en outre adapté pour générer un identifiant unique de conférence par tirage aléatoire de deux mots choisis parmi la bibliothèque de mots, et pour convertir l'identifiant en piste sonore.

13. Produit programme d'ordinateur, comprenant des instructions de code pour la mise en oeuvre d'un procédé de création de conférence audio ou vidéo, et des instructions de code pour la mise en oeuvre d'un procédé de participation à une conférence audio ou vidéo, lorsque chaque procédé est mis en oeuvre par un processeur d'un terminal,
le procédé de création de conférence comprenant :
- l'envoi d'une requête (90) de création de conférence à un serveur,
- la réception (110) d'un identifiant de conférence comprenant au moins deux mots, et
- l'affichage des mots de l'identifiant sur un écran du terminal ou la lecture (113) d'une piste sonore énonçant les mots de l'identifiant par un haut-parleur du terminal, et
le procédé de participation à une conférence comprenant :
- l'enregistrement (220) d'une séquence vocale par un microphone du terminal,
- la connexion au serveur (210) et l'envoi de ladite séquence vocale (230) au serveur.

14. Terminal (3, 3') de conférence audio ou vidéo, comprenant :
- un haut-parleur (30),
- un microphone (31), et
le terminal de conférence audio ou vidéo étant adapté pour se connecter à un serveur via un réseau de communication, et étant configuré pour mettre en oeuvre un procédé de création de conférence audio ou vidéo comprenant :
- l'envoi d'une requête (90) de création de conférence à un serveur,
- la réception d'un identifiant de conférence (110) comprenant au moins deux mots, et
- l'affichage des mots de l'identifiant sur un écran du terminal ou la lecture (113) d'une piste sonore énonçant les mots de l'identifiant par un haut-parleur du terminal, et
et pour mettre en oeuvre un procédé de participation à une conférence comprenant :
- l'enregistrement (220) d'une séquence vocale par un microphone du terminal,
- la connexion (210) au serveur (1) et l'envoi (230) de ladite séquence vocale au serveur.

15. Terminal (3,3') selon la revendication précédente, comprenant en outre une première interface de commande, configurée de sorte que son activation déclenche l'envoi d'une requête de création de conférence à un serveur, et une deuxième interface de commande, configurée de sorte que son activation déclenche les étapes d'enregistrement (220) d'une séquence vocale, de connexion (210) au serveur (1) et d'envoi (230) de ladite séquence vocale au serveur.

## Patentansprüche

1. Verfahren zum Erstellen einer Audio- oder Videokonferenz und zum Autorisieren von Teilnehmern, der Konferenz beizutreten, implementiert durch ein System, das einen Server (1) und wenigstens ein Endgerät (3) mit einem Mikrofon (30) umfasst, wobei das Endgerät (3) ferner dazu ausgebildet ist, mit dem Server (1) über ein Kommunikationsnetzwerk (2) zu kommunizieren, wobei das Verfahren die folgenden Schritte umfasst:
- Erstellen (100) einer Audio- oder Videokonferenz durch den Server und Zuordnen einer eindeutigen Kennung zu der Konferenz durch den Server,
- Verbindung (200) von wenigstens einem Endgerät (3, 3') mit der Audio- oder Videokonferenz,
**dadurch gekennzeichnet, dass** die eindeutige Kennung der Audio- oder Videokonferenz wenigstens zwei Wörter umfasst, und dass die Verbindung (200) des Endgeräts mit der Audio- oder Videokonferenz Folgendes umfasst:
- den Aufbau (210) einer Verbindung zwischen dem Endgerät (3, 3') und dem Server (1),
- die Aufnahme (220) einer Sprachsequenz eines Benutzers des Endgeräts durch das Mikrofon des Endgeräts (3, 3'),
- die Transkription (240) der Sprachsequenz in Text, und
- den Vergleich (250), durch den Server (1), des Textes mit wenigstens einer Konferenzkennung, die wenigstens zwei Wörter umfasst, und,
- wenn der Text mit der Konferenzkennung übereinstimmt, die Verbindung (260) des Endgeräts mit der Konferenz.

2. Verfahren nach Anspruch 1, wobei jedes Wort der eindeutigen Konferenzkennung zufällig aus einer Wortbibliothek gezogen wird.

3. Verfahren nach einem der Ansprüche 1 oder 2, wobei die Konferenz eingerichtet wird, wenn der Server eine Anfrage (90) vom Endgerät (3) empfängt.

4. Verfahren nach einem der vorhergehenden Ansprüche, wobei die Konferenzkennung für eine bestimmte Zeit gültig ist.

5. Verfahren nach einem der Ansprüche 1 bis 3, wobei die Kennung dauerhaft gültig ist und die Kennung einen Satz aus mehr als zwei Wörtern umfasst.

6. Verfahren nach Anspruch 5, das vor der Erstellung (100) der Konferenz durch den Server einen Schritt des Sendens einer Anfrage (90) zur Erstellung der Konferenz durch das Endgerät (3) an den Server umfasst, wobei die Anfrage ferner eine vom Endgerät (3) vorgeschlagene Kennung umfasst und der Schritt (100) der Erstellung der Konferenz durch den Server ferner eine Überprüfung der Verfügbarkeit der vorgeschlagenen Kennung durch den Server umfasst, und, wenn die vorgeschlagene Kennung verfügbar ist, die Zuordnung der vorgeschlagenen Kennung zur Konferenz.

7. Verfahren nach einem der vorhergehenden Ansprüche, wobei das Endgerät (3, 3') ferner einen Lautsprecher (31) umfasst und das Verfahren ferner einen Schritt des Sendens einer Anfrage (90) zum Erstellen einer Konferenz durch das Endgerät (3) an den Server (1) und einen Schritt (110) des Übermittelns der Kennung der Konferenz an das Endgerät (3) durch den Server (1) umfasst, wobei die Kennung in eine Tonspur umgewandelt (111) wird, die die beiden Wörter ausspricht, und über den Lautsprecher des Endgeräts abgespielt (113) wird.

8. Verfahren nach dem vorhergehenden Anspruch, wobei die Kennung vom Server (1) in eine Tonspur umgewandelt (111) wird und die Tonspur vom Server an das Endgerät übertragen (112) wird.

9. Verfahren nach einem der vorhergehenden Ansprüche, wobei jede Verbindung eines Endgeräts mit der Konferenz durch VolP erfolgt.

10. Server (1) zur Verwaltung von Audio- oder Videokonferenzen, umfassend:
- einen Speicher (11), in dem eine Wortbibliothek gespeichert ist,
- einen Rechner (10),
- wenigstens eine Schnittstelle (12) zur Kommunikation mit Benutzerendgeräten (3, 3') über wenigstens ein Kommunikationsnetz (2), wobei der Server dazu ausgebildet ist:
- eine Audio- oder Videokonferenz zu erstellen und der Konferenz eine eindeutige Kennung zuzuordnen,
- eine Sprachsequenz eines Endgerätebenutzers in Text umzusetzen (240),
- Vergleichen (250) des Textes mit wenigstens einer Konferenzkennung, die wenigstens zwei in der Wortbibliothek enthaltene Wörter umfasst, und
- Verbinden (260) des Endgeräts mit einer Konferenz, wenn der Text mit der Konferenzkennung übereinstimmt.

11. Server (1) nach Anspruch 10, wobei der Server ferner dazu ausgebildet ist, eine Audio- oder Videokonferenz zu erzeugen (100), die mit einer eindeutigen Kennung verbunden ist, die wenigstens zwei Wörter umfasst, die in der Wortbibliothek enthalten sind.

12. Server (1) nach Anspruch 11, wobei der Server ferner dazu ausgebildet ist, eine eindeutige Konferenzkennung durch zufälliges Ziehen von zwei aus der Wortbibliothek ausgewählten Wörtern zu erzeugen und die Kennung in eine Tonspur umzuwandeln.

13. Computerprogrammprodukt, das Codeanweisungen zur Durchführung eines Verfahrens zur Erstellung einer Audio- oder Videokonferenz und Codeanweisungen zur Durchführung eines Verfahrens zur Teilnahme an einer Audio- oder Videokonferenz umfasst, wenn jedes Verfahren von einem Prozessor eines Endgeräts durchgeführt wird, wobei das Verfahren zur Erstellung einer Konferenz umfasst:
- das Senden einer Anfrage (90) zur Erstellung einer Konferenz an einen Server,
- das Empfangen (110) einer Konferenzkennung, die wenigstens zwei Wörter umfasst, und
- das Anzeigen der Wörter der Kennung auf einem Bildschirm des Endgeräts, und
- das Lesen (113) einer Tonspur, die die Wörter der Kennung wiedergibt, durch einen Lautsprecher des Endgeräts, und
wobei das Verfahren zur Teilnahme an einer Konferenz umfasst:
- das Aufnehmen (220) einer Sprachsequenz durch ein Mikrofon des Endgeräts,
- das Verbinden mit dem Server (210) und das Senden der Sprachsequenz (230) an den Server.

14. Endgerät (3, 3') für Audio- oder Videokonferenzen, das Folgendes umfasst:
- einen Lautsprecher (30),
- ein Mikrofon (31), und
wobei das Audio- oder Videokonferenzendgerätes dazu geeignet ist, sich über ein Kommunikationsnetzwerk mit einem Server zu verbinden, und dazu ausgebildet ist, ein Verfahren zur Erstellung einer Audio- oder Videokonferenz durchzuführen, das Folgendes umfasst:
- Senden einer Anfrage (90) zum Erstellen einer Konferenz an einen Server,
- Empfangen einer Konferenzkennung (110), die wenigstens zwei Wörter umfasst, und
- Anzeigen der Wörter der Kennung auf einem Bildschirm des Endgerätes oder Lesen (113) einer Tonspur, die die Wörter der Kennung ausspricht, über einen Lautsprecher des Endgerätes, und
zur Durchführung eines Verfahrens zur Teilnahme an einer Konferenz, umfassend:
- die Aufnahme (220) einer Sprachsequenz durch ein Mikrofon des Endgeräts,
- die Verbindung (210) mit dem Server (1) und das Senden (230) der Sprachsequenz an den Server.

15. Endgerät (3, 3') nach dem vorhergehenden Anspruch, ferner umfassend eine erste Steuerschnittstelle, die derart ausgebildet ist, dass ihre Aktivierung das Senden einer Anfrage zum Erstellen einer Konferenz an einen Server auslöst, und eine zweite Steuerschnittstelle, die derart ausgebildet ist, dass ihre Aktivierung die Schritte des Aufzeichnens (220) einer Sprachsequenz, des Verbindens (210) mit dem Server (1) und des Sendens (230) der Sprachsequenz an den Server auslöst.

## Claims

1. A method for creating an audio or video conference and for authorising participants to join the conference, implemented by a system comprising a server (1) and at least one terminal (3) comprising a microphone (30), the terminal (3) being further adapted to communicate with the server (1) by a communication network (2), the method comprising the steps of:
- creating (100) by the server an audio or video conference, and associating by the server a unique identifier to the conference,
- connecting (200) at least one terminal (3, 3') to the audio or video conference,
**characterised in that** the unique identifier of the audio or video conference comprises at least two words, and **in that** the connection (200) of the terminal to the audio or video conference comprises:
- establishing (210) a connection between the terminal (3, 3') and the server (1),
- recording (220), by the microphone of the terminal (3, 3'), a voice sequence of a user of the terminal,
- transcribing (240) the voice sequence into text, and
- comparing (250), by the server (1), the text with at least one conference identifier comprising at least two words, and
- if the text corresponds to the identifier of the conference, connecting (260) the terminal to the conference.

2. The method according to claim 1, wherein each word of the unique identifier of the conference is randomly drawn from a word library.

3. The method according to one of claims 1 or 2, wherein the conference is created upon reception by the server of a request (90) originating from the terminal (3).

4. The method according to one of the preceding claims, wherein the identifier of the conference is valid for a determined period.

5. The method according to one of claims 1 to 3, wherein the identifier has a permanent validity, and said identifier comprises a sentence of more than two words.

6. The method according to claim 5, comprising, before the creation (100) of the conference by the server, a step of sending a conference creation request (90) by the terminal (3) to the server, the request further comprising an identifier proposed by the terminal (3),
and the step (100) of creating the conference by the server further comprises a verification, by the server, of the availability of the suggested identifier, and, if the suggested identifier is available, the association of the suggested identifier to the conference.

7. The method according to one of the preceding claims, the terminal (3, 3') further comprising a loudspeaker (31), and the method further comprising a step of sending a request (90) to create a conference by the terminal (3) to the server (1), and a step (110) of communicating the identifier of the conference to the terminal (3) by the server (1), wherein the identifier is converted (111) as a soundtrack stating the two words, and broadcasted (113) by the loudspeaker of the terminal.

8. The method according to the preceding claim, wherein the identifier is converted (111) into a soundtrack by the server (1), and said soundtrack is transmitted (112) by the server to the terminal.

9. The method according to one of the preceding claims, wherein each connection of a terminal to the conference is established in VoIP.

10. An audio or video conference management server (1), comprising:
- a memory (11) in which a word library is stored,
- a computer (10),
- at least one communication interface (12) with user terminals (3, 3') by at least one communication network (2),
the server being adapted to:
- create an audio or video conference, and associate a unique identifier to the conference,
- transpose (240) a voice sequence of a user of a terminal into text,
- compare (250) the text with at least one conference identifier comprising at least two words included in the word library, and
- connect (260) the terminal to a conference if the text corresponds to the identifier of the conference.

11. The server (1) according to claim 10, the server being further adapted to generate (100) an audio or video conference associated with a unique identifier comprising at least two words included in the word library.

12. The server (1) according to claim 11, the server being further adapted to generate a unique conference identifier by randomly drawing two words selected from the word library, and to convert the identifier into a soundtrack.

13. A computer program product, comprising code instructions for the implementation of a method for creating an audio or video conference, and code instructions for the implementation of a method for participating to an audio or video conference, when each method is implemented by a processor of a terminal,
the method for creating a conference comprising:
- sending a conference creation request (90) to a server,
- receiving (110) a conference identifier comprising at least two words, and
- displaying the words of the identifier on a screen of the terminal or reading (113) a soundtrack stating the words of the identifier by a loudspeaker of the terminal, and the method for participating to a conference comprising:
- recording (220) a voice sequence by a microphone of the terminal,
- connecting to the server (210) and sending said voice sequence (230) to the server.

14. An audio or video conference terminal (3, 3'), comprising:
- a loudspeaker (30),
- a microphone (31), and
the audio or video conference terminal being adapted to connect to a server via a communication network, and being configured to implement a method for creating an audio or video conference comprising:
- sending a conference creation request (90) to a server,
- receiving a conference identifier (110) comprising at least two words, and
- displaying the words of the identifier on a screen of the terminal or reading (113) a soundtrack stating the words of the identifier by a loudspeaker of the terminal, and and to implement a method for participating to a conference comprising:
- recording (220) a voice sequence by a microphone of the terminal,
- connecting (210) to the server (1) and sending (230) said voice sequence to the server.

15. The terminal (3, 3') according to the preceding claim, further comprising a first control interface, configured so that its activation triggers sending of a conference creation request to a server, and a second control interface, configured so that its activation triggers the steps of recording (220) a voice sequence, connecting (210) to the server (1) and sending (230) said voice sequence to the server.
